# EUROPÄISCHE PATENTANMELDUNG

(11) **EP 1 429 217 A2**
(43) Veröffentlichungstag der Anmeldung: **16.06.2004**
(21) Anmeldenummer: 03027092.0
(22) Anmeldetag: 25.11.2003
(51) Int. Cl.: G05B 19/418, G06K 7/00, G06F 13/10

(54) **Station mit Bedienfeld**

(30) Priorität: 25.11.2002 DE 10255056
(71) Anmelder: GROB-Werke Burkhart Grob e.K., 87719 Mindelheim (DE)
(72) Erfinder: Steger, Peter, 86825 Bad Wörishofen (DE)
(74) Vertreter: Pfister, Stefan Helmut Ulrich

(57) **Zusammenfassung**

Die Erfindung betrifft eine Station, insbesondere Bearbeitungs-, Meß-, Transportstation und dergleichen, welche insbesondere in einer Bearbeitungs- oder Fertigungslinie angeordnet ist, mit mindestens einer Steuereinrichtung mit Bedienfeld für Anzeige-, Steuerungs- und/oder Diagnosefunktionen der Station.

Die Erfindung zeichnet sich dadurch aus, daß das Bedienfeld portabel und kabellos mit mindestens einer Station bzw. Steuereinrichtung der Station und/oder einer zentralen Steuereinheit der Bearbeitungs- oder Fertigungslinie verbunden ist.

## Beschreibung

Die Erfindung betrifft eine Station, insbesondere Bearbeitungs-, Meß-, Transportstation oder dergleichen, welche insbesondere in einer Bearbeitungs- oder Fertigungslinie angeordnet ist, mit mindestens einer Steuereinrichtung mit Bedienfeld für Anzeige-, Steuerungs- und Diagnosefunktionen der Station, wobei das Bedienfeld portabel und kabellos zumindest auf die Steuereinrichtung der Station einzuwirken vermag.

Bearbeitungs-, Meß-, Transportstationen und dergleichen in Bearbeitungs- oder Fertigungslinien sind bekannt. Es handelt sich dabei um Stationen, die entlang einer Fertigungslinie oder Bearbeitungslinie (zum Beispiel Transferstraßen) angeordnet sind und die Werkstücke, welche sich zur Bearbeitung in der Bearbeitungs- oder Fertigungslinie befinden, bearbeiten, vermessen, montieren oder weitertransportieren. Nach dem Stand der Technik hat jede Station beziehungsweise Maschine ein fest eingebautes Hauptbedienteil, von dem aus man alle Maschinenfunktionen auslösen, ansehen, diagnostizieren beziehungsweise steuern kann. Zusätzlich sind Bedienfelder mit reduziertem Funktionsumfang dort angebracht, wo häufig Bedienhandlungen auszuführen sind. Dies kann beispielsweise am Beladeplatz des Werkzeugmagazines oder aber auch am Rüstplatz für die Werkstücke notwendig sein.

Es sind auch tragbare Bedienhandgeräte bekannt, die mit Kabeln mit dem Hauptbedienfeld beziehungsweise der Hauptsteuertafel einer Station verbunden werden. Derartige Bedienhandgeräte benutzt man, wenn man für bestimmte Aufgaben eine Position einnehmen muß, von der aus man die Hauptsteuertafel beziehungsweise das Hauptbedienfeld nicht erreichen kann. Beispielsweise ist dies notwendig, wenn sich die Bedienperson innerhalb des Arbeitsraumes einer Station aufhalten muß, um Einrichtarbeiten durchzuführen.

Nach dem Stand der Technik ist es nun notwendig, daß die Bedien- und Kontrollfunktionen von Personen ausgeführt werden müssen, die sich entlang der Fertigungslinie bewegen und an den jeweiligen Hauptbedienfeldern der Stationen die notwendigen Maschinenfunktionen überwachen beziehungsweise auslösen.

Bei verketteten Systemen haben auch die Steuerungen der Peripherie eigene Bedienfelder. Derartige periphere Verkettungseinrichtungen sind beispielsweise Roboter, Prüfstationen, Montagestationen oder Waschmaschinen. Auch diese besitzen eigene Bedienfelder. Da entlang einer Bearbeitungs- oder Fertigungslinie die unterschiedlichsten Stationen von unterschiedlichen Herstellern angeordnet sind, müssen der oder die Bediener einer Bearbeitungs- oder Fertigungslinie unterschiedlichste Bedieneroberflächen der unterschiedlichen Maschinen beherrschen.

Aus Sicherheitsgründen sind bestimmte Steuerungsfunktionen nur bestimmten Bedienpersonen zugänglich, die beispielsweise besondere Qualifikationen für derartige Tätigkeiten besitzen. Diese Funktionen sind dann beispielsweise nur aufrufbar, wenn man bestimmte Paßwörter eingibt beziehungsweise Schlüssel für entsprechende Schlüsselschalter besitzt. Die Schlüssel müssen den richtigen Personen im richtigen Augenblick zur Verfügung stehen. Sie bedeuten mehr Kosten bei der Maschinenbeschaffung. Das Problem der Paßwörter ist, daß diese vor Unbefugten nur schwer geheim zu halten sind. Bedienhandgeräte, die mit Kabel mit den Steuereinrichtungen der Station verbunden sind, sind aufgrund der störenden Kabel sehr unkomfortabel in der Bedienung. Die Kabel können zudem relativ schnell beschädigt werden. Des Weiteren ist eine Unfallgefährdung dadurch angegeben, daß Bedienpersonen über die Kabel stolpern können.

Die gleiche Problematik existiert auch in Bearbeitungszentren mit einem oder mehreren, gegebenenfalls portablen Bedienfeldern. Auch hier treten die zuvor beschriebenen Probleme analog auf.

Die europäische Patentschrift 369 188 beschreibt ein Kommunikations-, Informations- und Wartungs-, Diagnostik- und Ausbildungssystem, bei welchem ein Datennetzwerk vorgesehen ist, in welchem auch Produktionsmaschinen angeordnet sein können und in der Hand gehaltene Bedienfelder über eine Kette von Infrarot-Satelliten mit dem Netzwerk verbindbar sind. Dabei wird neben dem drahtgebundenen Netzwerk auch ein auf Infrarotstrecken aufbauendes, kabelloses Netzwerk vorgesehen, was verhältnismäßig aufwendig ist. Eine solche Anordnung ist daher insbesondere in Bereichen einsetzbar, in welchen ein kabelgebundenes Netzwerk nicht verlegbar ist. Darüberhinaus ist ein solches System nur für den Diagnostik- oder Wartungsbetrieb gedacht.

Die deutsche Offenlegungsschrift 196 25 997 beschreibt eine optische Übertragungsstrecke für das rasche Ein- beziehungsweise Verstellen der jeweiligen Elemente einer Maschine.

Genauso wie die europäische Patentschrift 369 188 wird die kabellose Übertragung im optischen Frequenzbereich, zum Beispiel Infrarotbereich durchgeführt, was allerdings eine direkte Sichtverbindung zwischen Sender und Empfänger benötigt. Der Einsatz einer solcher Anordnung bei Steuerfunktionen ist bei solchen solchen Anordnungen in keinster Weise sicher.

Ausgehend von diesem Stand der Technik ist es Aufgabe diese Erfindung, diesen beschriebenen Stande der Technik sicherer zu gestalten.

Zur Lösung dieser Aufgabe schlägt die Erfindung zunächst vor, daß, ausgehend von der Station wie eingangs beschrieben, eine Ortsbindungsvorrichtung vorgesehen ist und ein Einwirken des portablen Bedienfeldes auf die Steuereinrichtung beziehungsweise die Station nur bei aktivierter Ortsbindungsvorrichtung möglich ist. Der Grad an Sicherheit der erfindungsgemäßen Station wird durch diesen erfindungsgemäßen Vorschlag erheblich erhöht. Da erfindungsgemäß vorgesehen ist, daß die Station durch das portable Bedienfeld steuerbar ist, wird durch den erfindungsgemäßen Vorschlag sichergestellt, daß eine solche Steuerungsmöglichkeit nur möglich ist, wenn die Ortsbindungsvorrichtung aktiviert ist. Hierdurch wird sicher vermieden, daß eine Bedienperson, die einen zu großen Abstand zur zu steuernden Station aufweist, diese steuert und vielleicht gefährliche Bearbeitungsschritte der Station veranlaßt, ohne diese unmittelbar kontrollieren oder beobachten zu können.

Die Ortsbindungsvorrichtung sieht letztendlich vor, daß sichergestellt ist, daß sich die Bedienperson beziehungsweise das die Station steuernde portable Bedienfeld in einem entsprechenden Abstand zur Station befindet.

Die Ortsbindungsvorrichtung bewirkt dabei ein von der Kommunikation zwischen dem Bedienfeld und der Station unabhängiges "Band", welches nur dazu dient, sicherzustellen, daß sich die Bedienperson in einem gegebenenfalls vorbestimmbaren Abstand zur Station befindet und somit einerseits die Vorzüge des kabellosen Bedienfeldes auszunutzen vermag, andererseits aber nicht soweit von dieser entfernt ist, daß unbeabsichtigte Bearbeitungsschritte oder Funktionalitäten der Station unbeobachtet erfolgen.

In gleicher Weise wird diese Aufgabe aber auch durch eine erfindungsgemäße Station gelöst, bei welcher die kabellose Verbindung zwischen dem Bedienfeld und der Steuereinrichtung durch Funk, insbesondere in einem Frequenzbereich von 200 Megahertz bis 100 Gigahertz, bevorzugt zwischen 1 und 10 Gigahertz, insbesondere zwischen 2 und 3 Gigahertz sowie zwischen 4 und 6 Gigahertz erfolgt.

Im Stand der Technik sind kabellose Verbindungen zwischen dem Bedienfeld und der Station nur mit Hilfe von optischen Übertragungsstrecken, zum Beispiel im Infrarotbereich bekannt. Diese Anordnung setzt voraus, daß immer eine freie Sichtstrecke zwischen dem Sender und dem Empfänger bestehen muß. Wird diese freie Sicht zwischen Sender und Empfänger unbeabsichtigt unterbrochen, zum Beispiel durch eine offene Maschinenschranktür oder dergleichen, so wird letztendlich die Steuerung unterbrochen und die Maschine beziehungsweise die Station ist über das Bedienfeld nicht mehr beherrschbar. Daß hieraus unbeherrschte Maschinen- beziehungsweise Stationszustände resultieren können und somit die Sicherheit erheblich abgesenkt ist, ist die logische Konsequenz.

Durch den erfindungsgemäßen Vorschlag wird die Betriebssicherheit und somti die Sicherheit der Station wiederum erheblich erhöht. Der Einsatz eines Funkbandes in einem Frequenzbereich von 200 Megahertz bis 100 Gigahertz erlaubt es die Station mit Hilfe des drahtlos verbundenen Bedienfeldes sehr zuverlässig zu betreiben. Insbesondere wurden dabei mit dem Frequenzband zwischen 1 und 10 Gigahertz hervorragende Betriebsergebnisse erreicht, da die Verbindung gerade in diesem Frequenzbereich überraschenderweise sehr störunanfällig und stabil ist. Dabei ist zu beachten, daß die Erfindung insbesondere auch bei spanabhebenden oder anderen Bearbeitungsmaschinen wie Funkenerosionen und so weiter zum Einsatz komen, wo eine erhebliche elektromagnetische Verschmutzung droht, die natürlich auf diesen Kommunikationskanal Einfluß zu nehmen droht. Tatsächlich aber sind die Beeinträchtigungen so gering, was zum einen durch das gewählte Frequenzband ermöglicht wird und zum anderen durch das entsprechende Übertragungsprotokoll des in diesem Frequenzband arbeitenden Kommunikationskanals günstig beeinflußbar ist. Zunächst aber gelingt es, in diesen bevorzugten Frequenzintervallen zwischen 1 und 10 Gigahertz und noch mehr in den Teilbändern von 2 und 3 Gigahertz sowie 4 bis 6 Gigahertz einen Frequenzbereich vorzuschlagen, der prinzipiell gut verwendbar ist. In diesem Zusammenhang ist insbesondere die als "Bluetooth" bekannte Technologie zu erwähnen, bei welcher ein äußerst störunanfälliges Kommunikationsprotokoll zwischen dem Sender und Empfänger eingesetzt wird.

Gemäß der Erfindung ist dabei vorgesehen, daß die beiden zuvor geschilderten einheitlichen Maßnahmen jeweils einzeln bereits die erfindungsgemäße Aufgabe lösen. Hierfür beansprucht die Erfindung jeweils Schutz. Natürlich ist es möglich, daß diese beiden Maßnahmen gemeinsam gekoppelt werden und so eine erhebliche Steigerung der Betriebssicherheit erreicht wird. Zum einen wird dadurch das Bedienpersonal gezwungen in einer vorgebbaren Entfernung zur Station sich aufzuhalten, wenn diese gesteuert wird, und zum anderen ist die Kommunikation zwischen Bedienfeld und Station effektiv, zuverlässig und sicher.

Dabei kommt es nicht darauf an, daß die Ortsbindungsvorrichtung als eigenständiges System ausgebildet ist. Die Ortsbindungsvorrichtung ist gemäß der Erfindung sehr variabel realisierbar, nämlich daß zum einen die Ortsbindungsvorrichtung in einem eigenen Modul oder System realisiert ist oder, in einer anderen Variante, die aufgrund des Kommunikationskanals sowieso bestehende Verbindung dahingehend ausgewertet wird, daß hiermit eine Ortsbindungsvorrichtung realisiert wird.

Zum Beispiel ist es möglich, wie dies in einer Variante der Erfindung ebenfalls vorgesehen ist, die Ortsbindungsvorrichtung nur dadurch zu aktivieren, daß das von dem Bedienfeld abgegebene Signal von dem Empfänger mit einer Mindestsignalstärke empfangen wird. Wird diese Mindestsignalstärke unterschritten, so wird sich das Bedienfeld in einem zu großen Abstand von dem Empfänger aufhalten und somit unter Umständen außerhalb des Bereichs der zu steuernden Station. Wird diese Mindestsignalstärke zum Beispiel längere Zeit unterschritten (die Grenze ist dabei frei wählbar), so wird die Ortsbindungsvorrichtung deaktiviert und zumindest eine Steuerungsmöglichkeit der Station durch das Bedienfeld hernach abgeschaltet. Gegebenenfalls ist es aber weiterhin noch möglich, entsprechende Anzeige- oder Diagnosefunktionen der Station mit dem Bedienfeld auszuführen.

Geschickterweise wird dabei der Bedienperson in einem gewissen Intervall oberhalb der Mindestsignalstärke eine entsprechende Information übergeben, um auf den drohenden Wegfall der Steuerungsberechtigung hinzuweisen. Gleichzeitig kann dabei auch die Station in einen entsprechenden unkritischen Stand verfahren werden, um die Station selber zu sichern.

Die Ortsbindungsvorrichtung ist insofern auch als Funktion zu verstehen, die eine entsprechende Funktionalität aufweist und im Ergebnis aktiviert oder deaktiviert ist, aufgrunddessen dann die Station durch das Bedienfeld beherrschbar, insbesondere steuerbar ist oder nicht. Eine solche Vorgehensweise ist insbesondere in den Verfahrensablauf einfach einbindbar.

Mit der erfindungsgemäßen Station, die insbesondere für Bearbeitungs-, Meß-, Montage- oder Transportaufgaben geeignet ist und die entweder in einer Bearbeitungs- oder Fertigungslinie oder in einem Bearbeitungszentrum angeordnet sein kann, wird erreicht, daß mittels eines Bedienfeldes sämtliche Funktionen der Station beziehungsweise der Stationen aufgerufen beziehungsweise kontrolliert werden können. Gleichzeitig ist es möglich, daß die Station beziehungsweise zentrale Steuereinheit mit dem Bedienfeld beziehungsweise über das Bedienfeld mit dem Bediener kommuniziert. Durch das portable Bedienfeld können die Bedienfelder, welche bisher an jeder Station separat angebracht waren, entfallen. Es ist lediglich eine Steuereinrichtung der Station notwendig, die sowohl mit dem Bedienfeld, als auch gegebenenfalls mit der zentralen Steuereinheit der Bearbeitungs- beziehungsweise Fertigungslinie oder des Bearbeitungszentrums verbunden ist. Es entfallen damit alle fest installierten Bedienpulte beziehungsweise auch die Schlüsselschalter beziehungsweise Codiereinrichtungen, welche an den jeweiligen Bedienpulten bisher angebracht waren. Es entfallen weiterhin störende Kabel der bisher bekannten portablen Bedienfelder, welche mittels Kabeln mit der jeweiligen Station verbunden waren. Somit werden auch Unfallgefährdungen in Bearbeitungsbeziehungsweise Fertigungslinien oder Bearbeitungszentren abgebaut.

Selbstverständlich ist es auch möglich, daß ein Bedienfeld nur mit einer einzigen Station verbunen ist. Es ist selbstverständlich auch daran gedacht, daß ein Bedienfeld lediglich mit einer zentralen Steuereinheit der Bearbeitungs- und Fertigungslinie in Verbindung treten kann. Mehrkosten bei der Maschinenanschaffung beziehungsweise -beschaffung durch die Bedienpulte beziehungsweise Codier- und Sicherungseinrichtungen entfallen ebenfalls beziehungsweise werden in erheblichem Maße reduziert, da sie jetzt zum einen einheitlich für eine gesamte Fertigungslinie oder ein Bearbeitungszentrum gestaltbar sind und es lediglich gewährleistet sein muß, daß das Bedienfeld sowohl mit der oder den Stationen als auch mit einer gegebenenfalls vorhandenen zentralen Steuereinheit in Verbindung treten kann.

Entsprechend einer vorteilhaften Weiterbildung der Erfindung ist es vorgesehen, daß die Station beziehungsweise die zentrale Steuereinheit durch mindestens je einen Sender und mindestens je einen Empfänger und das Bedienfeld durch eine Sender-/ Empfangseinheit miteinander verbunden sind. Damit ist sicher gewährleistet, daß ein Datenaustausch (oder eine Kommunikation) zwischen Station, zentraler Steuereinheit und Bedienfeld problemlos bidirektional möglich ist.

Gemäß einer vorteilhaften Weiterbildung der erfindungsgemäßen Lösung ist mindestens ein Bedienfeld mit mehreren Stationen gleichzeitig oder nacheinander verbindbar. Dabei kann das Bedienfeld optional gleichzeitig auch mit der zentralen Steuereinheit der Bearbeitungs- oder Fertigungslinie beziehungsweise des Bearbeitungszentrums verbunden sein. Durch diese vorteilhafte Weiterbildung gelingt es, den anlagentechnischen Aufwand weiter zu reduzieren. Durch den erfindungsgemäßen Vorschlag wird erreicht, daß zum Beispiel zwei hintereinander angeordnete Stationen über ein Bedienfeld kontrollier- und steuerbar sind. Dabei wird geschickter Weise eine Anzeigenvorrichtung des Bedienfeldes entsprechend für die beiden Stationen geteilt und so die unterschiedlichen Funktionalitäten gleichzeitig dargestellt. Die Erfindung erlaubt es daher auch verhältnismäßig komplexe Steuerungsaufgaben so in eleganter Weise zu ermöglichen. Natürlich ist es möglich auch mehrere Stationen gleichzeitig mit dem Bedienfeld zu steuern und zu kontrollieren, die Erfindung ist insofern in ihrem Anwendungsbereich nicht beschränkt.

In einer bevorzugten Ausgestaltung der Erfindung ist vorgesehen, daß das Bedienfeld mittelbar über die zentrale Steuereinheit oder unmittelbar auf die Steuereinrichtung der Station wirkt.

Gemäß der Erfindung gibt es mehrere Möglichkeiten, wie das Bedienfeld auf die Steuereinrichtung einzuwirken vermag. Je nach Ausgestaltung der Station beziehungsweise ihren Verbund in der Bearbeitungs- und Fertigungslinie ist es dabei günstig, daß das Bedienfeld über die zentrale Steuereinheit auf die Station beziehungsweise deren Steuereinrichtung wirkt. Ist aber in der Station bereits eine entsprechende Logik (zum Beispiel eine Steuerung) vorgesehen, so ist die Erfindung auch hier vorteilhaft einzusetzen, da der Datenverkehr im Datennetzwerk entsprechend reduziert werden kann, wenn das Bedienfeld direkt auf die Steuereinrichtung der Station wirkt. Gegebenenfalls erfolgt eine solche Kommunikation dann, wenn in der zentralen Steuereinheit die entsprechenden Berechtigungen und Autorisierungen abgefragt worden sind.

Ein weiterer Aspekt der erfindungsgemäßen Station ist durch einheitliche Funktions-, Anzeige- und Steuerprogramme der Bedienfelder und Stationen beziehungsweise deren Steuereinrichtungen angegeben, derart, daß eine einheitliche Bedienung der unterschiedlichen Stationen, unabhängig vom jeweiligen Maschinentyp gegeben ist. Es gelingt mittels dieser Variante, den steuer- und programmtechnischen Aufwand für eine Bearbeitungs- oder Fertigungslinie beziehungsweise ein Bearbeitungszentrum erheblich zu senken. Die jeweiligen Maschinentypen beziehungsweise deren Steuerungen sind jeweils auf die dann einheitlichen Funktions-, Anzeige-, Steuerprogramme programmiert.

Erfindungsgemäß wurde auch gefunden, daß es von Vorteil ist, wenn das Bedienfeld mit der zentralen Steuereinheit der Bearbeitungs- und Fertigungslinie kabellos verbunden ist, derart, daß vom Bedienfeld Programme und Funktionen der zentralen Steuereinheit für die Bearbeitungs- und Fertigungslinie beziehungsweise für eine spezielle Station abruf- und/oder aktivierbar beziehungsweise auf das Bedienfeld übertragbar sind. Hiermit wird der Aufwand für die Bedienfelder selbst reduziert, indem es dort nicht notwendig ist, bestimmte Programme zu hinterlegen, die bereits in der zentralen Steuereinheit der Bearbeitungs- und Fertigungslinie zur Verfügung stehen. Es ist lediglich darauf zu achten, daß die Bedienfelder mit der zentralen Steuereinheit kommunizieren können.

Die Weiterbildung der erfindungsgemäßen Station zeichnet sich dadurch aus, daß die Station eine eindeutige Stationscodierung aufweist und aufgrund dieser Stationscodierung im Bedienfeld die jeweiligen Programme und Funktionen aktivierbar sind. Durch diese Variante der Erfindung ist es ermöglicht, daß bestimmte Bedienfelder für jeweils nur bestimmte Programme und Funktionen beziehungsweise deren Durchführung zur Verfügung stehen, beziehungsweise für eine spezielle Station die jeweils passenden Programme, Funktionen und/oder Daten zur Verfügung gestellt werden. Die jeweiligen Steuerungsprogramme werden dabei in einer weiteren Variante aufgrund der Stationscodierung von der zentralen Steuereinheit oder von der Station in das Bedienfeld (quasi "in-time") eingespielt, wodurch dem Bedienfeld immer die aktuelle Programmversion zur Verfügung gestellt ist.

Es hat sich auch von Vorteil erwiesen, wenn das Bedienfeld eine eindeutige Bedienfeldcodierung aufweist. Zum Beispiel ist in der zentralen Steuereinheit hinterlegt, welche Benutzer mit welchen Bedienfeld an der Fertigungslinie ist, um zum Beispiel bei entsprechenden Fehlermeldungen zielgerichtet genau den jeweiligen Benutzer (in Abhängigkeit seiner erlaubten Tätigkeiten, Ausbildung beziehungsweise Aufgabenfelder) über sein Bedienfeld anzurufen und entsprechende Wartungs- oder Einstellarbeiten abzurufen. Die erfindungsgemäß vorgeschlagene Bedienfeldcodierung erlaubt dabei eine eindeutige und auch zuverlässige Verknüpfung mit dem jeweiligen Benutzer.

Die erfindungsgemässe Station ist gekennzeichnet durch eine kabellose Verbindung. Diese Verbindung kann eine elektromagnetische Verbindung, wie beispielsweise eine Funkverbindung, Infrarot- oder optische Verbindung sein. Für die Realisierung einer kabellosen Verbindung sind dazu mehrere technische Möglichkeiten denkbar. Insbesondere eine Funkverbindung ist für die Realisierung der erfindungsgemäßen Lösungen besonders geeignet. Gegebenenfalls sind auch Lösungen mittels Infrarotbeziehungsweise optischen Verbindungen. Auf die Vorteile des Einsatzes eines Funkbandes im Bereich von 200 Megahertz bis 100 Gigahertz wurde bereits oben ausführlich hingewiesen.

Es hat sich auch als Vorteil erwiesen, daß über das Bedienfeld mittels einer Identitätskennungsvorrichtung dem Benutzer desselben, bestimmte Programme beziehungsweise Funktionen zuordenbar sind. Derartige Identitätserkennungsvorrichtungen sind zum Beispiel Schlüsselschalter, Paßwortabfragen über Eingabe beziehungsweise Sichtfeld, Magnetstreifenleser, Chipkarte, am Körper getragenen Transponder beziehungsweise Fingerabdruckerkennung oder Vermessung der Iris des Auges. Durch eine solche erfindungsgemäße Weiterbildung der Station wird erreicht, daß dem jeweiligen Bedienfeld die erlaubten Operationen des jeweiligen Benutzers zuordenbar sind.

Hierbei ist beispielsweise daran gedacht, daß dann, wenn bestimmte Mitarbeiter keine ausreichende Qualifikation für bestimmte Aufgaben besitzen, nur Aufgaben und Funktionen zugewiesen werden, die das Bedienpersonal ausführen kann. Dies können beispielsweise Einrichtaufgaben beziehungsweise Werkzeugwechselaufgaben sein. Es ist beispielsweise denkbar, daß bestimmte Bedienfelder auch nur für die Bedienperson codiert werden, die am Rüstplatz beziehungsweise Beladeplatz für die Werkstücke diese auf die Fertigungslinie beziehungsweise in deren dafür vorgesehenden Zuführtransporteinrichtungen aufzulegen. Die Bediensicherheit der gesamten Fertigungslinie beziehungsweise eines Bearbeitungszentrums wird dadurch erheblich erhöht.

Eine Weiterbildung der erfindungsgemäßen Station ist dadurch gekennzeichnet, daß das Bedienfeld Sprachauswahlmenüs aufweist, mittels derer unterschiedliche Sprachen einstellbar sind. Damit ist gewährleistet, daß beispielsweise auch ausländische Mitarbeiter einer Firma, die gleichzeitig an einer Bearbeitungsoder Fertigungslinie tätig sind, problemlos sowohl mit den Stationen als auch mit der zentralen Steuereinheit als auch untereinander kommunizieren können. Selbstverständlich ist es auch möglich, diese Sprachauswahlmenüs bei Lieferungen der Anlagen in das Ausland vorzusehen. Die entsprechenden Sprachmodule beziehungsweise -programme können dabei beispielsweise von der zentralen Steuereinheit abgerufen werden, beziehungsweise diese ergaben sich aus einer entsprechenden Information (Datenfeld) welches bei der Identitätserkennung überprüft wird.

Gemäß einer Variante der Erfindung ist vorgesehen, daß die Ortsbindungsvorrichtung als zusätzliche, kabellose Verbindung zwischen dem Bedienfeld und der Station beziehungsweise der Bearbeitungs- oder Fertigungslinie ausgebildet ist. Wie bereits weiter oben beschrieben wurde, ist die Ortsbindungsvorrichtung nicht nur darauf beschränkt, als eigenständiges, zusätzliches Modul ausgebildet zu sein, sonder es ist möglich, daß die Ortsbindungsvorrichtung sowieso bereits bestehende Kommunikationskanäle zwischen dem Bedienfeld und der Station entsprechend überwacht und im Ergebnis dieser Überwachung die Ortsbindungsvorrichtung entweder aktiv oder inaktiv ist. In dieser Variante ist vorgesehen, daß die Ortsbindungsvorrichtung als zusätzliche, kabellose Verbindung ausgebildet ist. Zum Beispiel ist vorgesehen, daß eine zusätzliche, auf Funk oder auf optischer Übertragungsstrecke basierende Kommunikation eingerichtet wird. Hierauf ist aber der Begriff Verbindung wiederum nicht beschränkt. Es ist auch möglich, diese zusätzliche, kabellose Verbindung zum Beispiel durch eine Ortung zu erreichen, wobei die Ortung selbstverständlich auch kabellos erfolgt. Es ist auch vorgesehen, daß diese Verbindung, zum Beispiel im Rahmen der ausgetauschten Informationen die zur Steuerung notwendig sind, herausgefiltert werden.

In diesem Zusammenhang ist es von Vorteil, daß die Ortsbindungsvorrichtung in einer von dem Bedienfeld getrennten Anordnung, insbesondere in einem Personenidentifikationsgerät realisiert ist und die Ortsbindungsvorrichtung nur aktivierbar ist, wenn sich die diese Anordnung tragende Bedienperson im Stationsbereich befindet. Zum Beispiel sind entsprechende Transponder als entsprechende Personenidentifikationsgeräte bereits bekannt. Ein entsprechendes Lesegerät wird im Bereich der Station aufgestellt und zum Beispiel der Zugang zur Station so gestaltet, daß die Bedienperson an diesem Lesegerät passiert, und dadurch die Ortsbindungsvorrichtung aktiviert ist. In letzter Konsequenz wird hierdurch ebenfalls eine zusätzliche, kabellose Verbindung realisiert.

Eine andere, sehr effiziente alternative Ausgestaltung der Erfindung ist dadurch angegeben, daß die Ortsbindungsvorrichtung durch eine Ortungsanordnung zur laufenden Bestimmung des Ortes entweder des Bedienfeldes oder der Bedienperson erfolgt und die Ortsbindungsvorrichtung nur aktivierbar ist, wenn sich der Ort im Stationsbereich befindet. Auch hierfür stehen mehrere Varianten zur Verfügung. In einer ersten Variante ist zum Beispiel ein Empfänger eines Global-Position-Systems (GPS) in dem Bedienfeld oder in der von der Bedienperson getragenen Anordnung vorgesehen. Hierdurch erfolgt eine Feststellung des Ortes entweder des Bedienfeldes oder der Bedienperson. Dieser Ort wird als Koordinate von dem Bedienfeld oder der Anordnung entweder an die zentrale Steuereinheit oder an die Steuereinrichtung übermittelt. Hier erfolgt dann ein Abgleich des Ortes mit dem Stationsbereich. Der Stationsbereich ist dabei diejenige als Koordinaten ausgedrückte Fläche, innerhalb der eine Bedienung der jeweiligen Station erlaubt sein soll. Liegt dieser Ort innerhalb dieses Stationsbereiches, so wird die Ortsbindungsvorrichtung aktiviert und eine Steuerung der Station ist möglich. Liegt dieser Ort außerhalb des Stationsbereiches, so wird die Ortsbindungsvorrichtung deaktiviert, eine Einwirkung insbesondere Steuerung des Bedienfeldes auf die dazugehörige Station unterbleibt.

Alternativ ist es aber auch möglich, daß die Ortungsanordnung durch eine Peilung erreicht wird. In diesem Fall werden mehrere Peilempfänger im Stationsbereich aufgestellt und die von dem Bedienelement oder von der Anordnung abgegebene Funkwelle entsprechend eingepeilt. Durch Triangulation kann auch hier der jeweilige Ort bestimmt werden und der Abgleich, wie beschrieben, erfolgen.

Neben diesen kabellosen Verbindungen als Ortsbindungsvorrichtung ist es auch möglich die Ortsbindungsvorrichtung als elektromagnetisch, mechanisch, elektrisch oder optisch wirkenden Schalter auszugestalten. Hierzu stehen zum Beispiel Bewegungsmelder, Schranken, Lichtschranken, Drehkreuze und dergleichen zur Verfügung, die entsprechend zu betätigen sind und dadurch sicherstellen, daß sich die Bedienperson im Bereich der Station befindet.

Es ist dabei günstig, daß die Ortsbindungsvorrichtung nur innerhalb einer vorgebbaren Entfernung zur Station aktivierbar ist. Diese Entfernung kann in manigfacher Weise definiert und eingestellt werden. Zum einen ist es zum Beispiel möglich, dies über die Sendeleistung der Bedienfelder einzustellen. Entfernt sich die Person dann zu weit von der Station und deren Empfänger, so fällt das entsprechend dort aufgenommene Signal unter eine Mindestsignalstärke und die Steuerungsverbindung wird unterbrochen. Bei einer Ortung wird die entsprechende Entfernung durch die als Koordinaten vorgebbare Fläche definiert.

In einer bevorzugten Variante der Erfindung ist vorgesehen, daß die Ortsbindungsvorrichtung als eine im Funkband oder im infraroten Wellenspektrum arbeitende Verbindung ausgebildet ist. Wie beschrieben kann sich die Ortsbindungsvorrichtung dabei der bereits bestehenden Verbindungen bedienen oder aber eine separate, eigenständige Verbindung besitzen und aufbauen. Unter Umständen ist dabei die Kombination mit einem auf Sichtweite funktionierenden System, also zum Beispiel im Bereich des infraroten Wellenspektrums, ungünstig. Für den sicheren Datenübertrag wird günstigerweise die Funkstrecke verwendet. Als infrarotes Wellenspektrum wird dabei der Spektralbereich zwischen ca. 800 Nanometer bis ca. 1 mm Wellenlänge angesehen.

Vorzugsweise wird dabei die Ortsbindungsvorrichtung in einer weiteren Variante dadurch aktiviert, daß das vom Bedienfeld abgegebenen Signal von mehreren, gegebenenfalls vorbestimmten Empfängern empfangen wird. Dadurch ist es möglich, der Bedienperson innerhalb der Station eine gewisse Beweglichkeit zuzuordnen, wobei dann das Bedienfeld von mehreren Empfängern erkannt wird. Diese Empfänger sind dann dabei entsprechend auswählbar, um die Bewegungsmöglichkeiten der Bedienperson entsprechend zu steuern beziehungsweise zu begrenzen.

Entsprechend einer vorteilhaften Weiterbildung der erfindungsgemäßen Station ist es vorgesehen, daß das Bedienfeld als eine auf dem Kopf getragene Bedienfeldeinheit ausgebildet ist. Diese Bedienfeldeinheit übernimmt Kontroll-, Anzeige- und Eingabeaufgaben. Die Bedienfeldeinheit kann dabei beispielsweise mittels eines Stirnbandes an dem Kopf der Bedienperson befestigt werden. Es ist selbstverständlich auch daran gedacht, die Bedienfeldeinheit in Form eines Helmes auszubilden, wie sie beispielsweise aus dem Motor-Rennsport oder aus der Militärfliegerei bekannt ist.

Die Bedienfeldeinheit kann dabei erfindungsgemäß ein Visier besitzen, über welches Informationen für die Bedienperson angezeigt werden.

Von Vorteil ist es dabei auch, wenn das Bedienfeld, insbesondere die Bedienfeldeinheit, ein Spracheingabe- und -ausgabesystem besitzt, über das die Kommunikation zwischen Bedienperson und Bedienfeld erfolgt.

Es wurde auch gefunden, daß es von Vorteil ist, wenn das Bedienfeld Bedienperson-Aktivitäts-Sensoren aufweist, welche bei Unregelmäßigkeiten der Bedienperson reagieren und gegebenenfalls ein Notprogramm aktivieren. So ist es beispielsweise vorgesehen, daß die Sensoren auf Unregelmäßigkeiten wie Übermüdung, Sekundenschlaf, Unfälle, Hilferufe oder dergleichen reagieren. Wenn beispielsweise die Bedienperson in einer Station verunfallt, kann über derartige Sensoren dann die gesamte Station beziehungsweise die Bearbeitungs- oder Fertigungslinie insgesamt abgeschaltet werden, um die Person zu schützen. Von Vorteil sind diese zuvor beschriebenen Ausführungsformen der Erfindung insbesondere deshalb, weil mit einer auf dem Kopf getragenen Bedienfeldeinheit die Bedienperson insgesamt weitere Bewegungsfreiheit erhält. Es sind beispielsweise beide Hände für andere Bearbeitungshandgriffe frei. Es kann gleichzeitig ein Augenschutz mit Hilfe einer derartigen Bedienfeldeinheit realisiert werden, wie sie in vielen Unternehmungen, aufgrund arbeitsschutzrechtlicher Bestimmungen und insbesondere auch in den USA zwingend vorgeschrieben sind. Gleichzeitig kann damit auch die Identifizierung der Bedienperson in jedem Augenblick gewährleistet werden. Dies könnte beispielsweise, wie bereits zuvor beschrieben, durch Irisdiagnosen und dergleichen erfolgen.

Das Reagieren des Systemes beziehungsweise des Bedienfeldes selbst auf bestimmte Unzulässigkeiten der Bedienpersond erhöht die Arbeitssicherheit und den Komfort der Bedienung insgesamt weiter. Beispielsweise sollen Sensoren im Visier erkennen, wenn die Person kurzzeitig bewußtlos ist oder wenn beispielsweise eine Übermüdung der Bedienperson vorliegt. Auch auf Arbeitsunfälle könnte beispielsweise ein derartiger Sensor ansprechen, und gegebenenfalls die Maschine, die Station beziehungsweise die gesamte Anlage anhalten und Hilfe schnell herbeiholen. Hierbei sind optische Systeme bevorzugt. Andere Systeme sind aber durchaus auch für die Lösung der gestellten Aufgaben geeignet.

Eine Weiterbildung der erfindungsgemäßen Station zeichnet sich dadurch aus, daß das Bedienfeld einen berührungsempfindlichen Bildschirm für Kontroll-, Anzeige-, Eingabe- beziehungsweise Bedienfunktionen aufweist. Derartige Bildschirme sind höchst komfortabel und sind in unterschiedlichsten Größen bereits zur Verfügung gestellt. Dabei ist es von Vorteil, wenn dieser berührungsempfindliche Bildschirm mit einem Digitalisierer unterlegt beziehungsweise ergänzt ist. Derart ausgeführte moderne Bedienfelder können sowohl in Art eines Portals, welches an einem Gurt um den Hals beziehungsweise die Schulter getragen wird, ausgeführt sein. Sie können aber auch, wie zuvor beschrieben, gemäß der Erfindung als Stirnband, Helm und dergleichen ausgebildet sein.

Ein weiterer Aspekt der erfindungsgemäßen Station ist dadurch angegeben, daß die Station selbst bei auftretenenden Fehlermeldungen beziehungsweise anstehenden Aufgaben, gegebenenfalls in Abhängigkeit der Fehler- beziehungsweise Aufgabenart eine Fehler- beziehungsweise Aufgabeninformation auf ein Bedienfeld in Abhängigkeit von dem erkannten Fehler beziehungsweise der erkannten Aufgabe auf ein spezielles Bedienfeld überträgt. Damit kann beispielsweise die für die Lösung der anstehenden Aufgabe qualifizierte Bedienperson sofort informiert und gerufen werden. Es ist beispielsweise auch vorgesehen, daß über die zentrale Steuerungseinheit die Person beziehungsweise das Bedienfeld ausgewählt wird, welches örtlich als nächstes an der jeweiligen Station ist, die die Fehlermeldung beziehungsweise Aufgabenmeldung abgesendet hat und so die Wartung optimiert.

Es wurde auch gefunden, daß es von Vorteil ist, wenn das Bedienfeld eine Informationseinheit aufweist, die durch das Eintreffen einer Fehler- beziehungsweise Aufgabeninformation aktiviert wird und die damit die Bedienperson entsprechend informiert. Derartige Informationseinheiten können akustisch, optisch und/oder mechanisch wirkende Informationseinheiten sein. Selbstverständlich ist auch eine Kombination der zuvor beschriebenen Informationsanzeigemöglichkeiten denkbar.

Eine vorteilhafte Weiterbildung der erfindungsgemäßen Station zeichnet sich durch eine digitalisierte Datenübertragung der kabellosen Verbindung aus. Dadurch werden die Vorteile einer digitalisierten Datenübertragung ebenfalls für die Station, für die Bedienfelder beziehungsweise für die zentrale Steuerungseinheit genutzt.

Es wird auch gefunden, daß es von Vorteil ist, wenn die zentrale Steuereinheit beziehungsweise die Station oder das Bedienfeld die jeweils an der Station über das Bedienfeld ausgeführten Programme beziehungsweise Funktionen mit protokolliert und gegebenenfalls abspeichert. Dadurch ist es gegeben, daß später bestimmte durchgeführte Bedienungen beziehungsweise Steuerungen oder andere funktionsabhängige Tätigkeiten nachvollziehbar sind. Derartige Informationen sind auch wichtig, für die Analyse des Störverhaltens bestimmter Anlagenteile, die zur Behebung erkannter Engpässe dann führen können.

In einer bevorzugten Ausgestaltung der Erfindung ist vorgesehen, daß das Bedienfeld zum einen eine Informationsanzeigeund eine Informationseingabevorrichtung aufweist. Das Bedienfeld ist zum Beispiel als mit einer Tastatur und gegebenenfalls mit einer Maussteuerung ausgestattetes Tableau ausgebildet, welches auch einen Bildschirm zum Anzeigen der jeweiligen Steuerungsinformationen usw. aufweist. Für das Manipulieren ist gegebenenfalls auch ein Steuerungsorgan, ähnlich wie ein Joystick vorgesehen. Das ganze Bedienfeld wird dabei so realisiert, daß es zum einen ziemlich robust ausgebildet ist und zum anderen problemlos portabel ist, zum Beispiel umhängbar ist.

Die Aufgabe der Erfindung wird auch gelöst durch eine Bearbeitungs- oder Fertigungslinie mit mindestens einer Station, wie sie zuvor in den unterschiedlichsten Ausführungsformen beschrieben wurde. Durch die Bearbeitungs- und Fertigungslinie mit einer erfindungsgemäßen Station mit portablem Bedienfeld, welches sowohl mit der oder den Stationen als auch mit der zentralen Steuerungseinheit oder als auch mit mehreren Bedienfeldern kommunizieren kann, ist es gewährleistet, daß die Bearbeitungs- und Fertigungslinien beziehungsweise Bearbeitungszentren mit erheblich geringeren Kostenaufwendungen für Steuerungs- und Bedienungsanlagen auskommen. Des weiteren ist eine derartige Bearbeitungs- oder Fertigungslinie dadurch gekennzeichnet, daß die Störanfälligkeit durch Bedienungsfehler des Bedienpersonals insgesamt reduziert werden.

Gemäß einer vorteilhaften Weiterbildung der Bearbeitungs- oder Fertigungslinie ist es vorgesehen, daß mehrere Stationen über einen gemeinsamen Sender und Empfänger mit mindestens einem Bedienfeld und/oder der zentralen Steuereinheit verbunden sind. Es kann sich dabei um eine gleichzeitige als auch eine nacheinander herzustellende Verbindung handeln.

Ein weiterer Aspekt der Bearbeitungs- oder Fertigungslinie ist dadurch gegeben, daß die zentrale Steuereinheit als Zentralrechner ausgebildet ist. Dadurch erhöhen sich insgesamt die zur Verfügung stehenden Programme beziehungsweise Funktionen, was die Universalität eines solchen Bearbeitungs- beziehungsweise einer Fertigungslinie insgesamt erhöht. Es ist somit möglich, in einer Bearbeitungs- oder Fertigungslinie beziehungsweise einem Fertigungszentrum ein zentrales Informations- und Bedienungssystem zu schaffen, über das alle Anlagen beziehungsweise Maschinenteile, der Zentralrechner beziehungsweise die zentrale Steuereinheit, die Bedienfelder beziehungsweise über die Bedienfelder die entsprechenden Bedienpersonen erreichbar sind und gegebenenfalls untereinander Informationen und Befehle austauschen können. Ein derartiges System ist beispielsweise in einer Fertigungshalle installierbar. Die Datensicherheit beim Datenaustausch kann dabei durch entsprechende datensicher Verbindungen hergestellt werden, wie dies beispielsweise über digitalisierte Funkverbindungen oder aber auch durch Übertragung von Informationen über die Energiezuführungssysteme, wie beispielsweise Elektrokabel, erfolgen.

In einer weiteren, vorteilhaften Ausgestaltung der Erfindung ist vorgesehen, daß die Stationen der Bearbeitungs- und Fertigungslinie sowie die zentrale Steuereinheit durch ein Datennetzwerk miteinander verbunden sind und der Sender/Empfänger beziehungsweise die Ortsbindungsvorrichtung entweder mittelbar über die Station oder unmittelbar mit dem Datennetzwerk verbunden ist. Durch dieses Datennetzwerk ist es möglich, zum einen den Werkstückfluß durch die Stationen der Bearbeitungslinie zu überwachen und zu koordinieren. Zum anderen ist es aber auch möglich, durch dieses Datennetzwerk die entsprechenden Befehle von dem Bedienfeld zur zentralen Steuerung oder über Sender und Empfänger im Netzwerk zu der jeweiligen Station oder unmittelbar zur Station zu leiten.

Die Aufgabe der Erfindung wird auch gelöst, durch die Verwendung eines portablen Bedienfeldes in einer Bearbeitungs- oder Fertigungslinie, welches kabellos mit mindestens einer Station und/oder der zentralen Steuereinheit der Bearbeitungs- und/oder Fertigungslinie beziehungsweise eines Bearbeitungszentrums verbunden ist. Alle zuvor bereits geschilderten Vorteile treten auch durch die Verwendung eines portablen Bedienfeldes in einer Bearbeitungs- oder Fertigungslinie ein.

Die Aufgabe der Erfindung wird weiterhin gelöst durch ein Verfahren für den Aufbau einer Kommunikation für Anzeige-, Steuerungs- und/oder Diagnosezwecke zwischen einem Bedienfeld und einer Station, insbesondere nach einem oder mehreren der zuvor beschriebenen Lösungen. Dabei wird zunächst zwischen dem Bedienfeld und der Station ein Kommunikationskanal errichtet, zumindest die Stationscodierung in das Bedienfeld übertragen und aufgrund der Stationscodierung dann die jeweiligen Programme beziehungsweise Funktionen für die Station auf dem Bedienfeld bedienbar beziehungsweise aufrufbar.

Eine Weiterbildung dieses Verfahrens zeichnet sich dadurch aus, daß das Bedienfeld in Abhängigkeit der Stationscodierung aus der zentralen Steuerungseinheit beziehungsweise dem Zentralrechner die jeweiligen Programme beziehungsweise Funktionen eingespielt bekommt. Es ist selbstverständlich auch möglich, daß aufgrund einer gegenseitigen Kommunikation zwischen Bedienfeld, Station und Zentralrechner die jeweiligen Programmfunktionen vom Zentralrechner abgerufen werden.

Eine Weiterbildung des erfindungsgemäßen Verfahrens zeichnet sich dadurch aus, daß sich der Benutzer über eine Identitätserkennungsvorrichtung an dem Bedienfeld identifiziret und benutzerabhängig die jeweiligen Programme beziehungsweise Funktionen dann zur Verfügung gestellt werden. Als vorteilhaft hat sich auch ein Verfahren erwiesen, welches sich dadurch auszeichnet, daß ein Bedienfeld gleichzeitig mit zwei oder mehreren Stationen beziehungsweise mit dem Zentralrechner beziehungsweise der zentralen Steuerungseinheit verbunden ist.

Das Verfahren zeichnet sich weiterhin dadurch aus, daß eine Station mit zwei oder mehreren Bedienfeldern und gegebenenfalls mit der zentralen Steuerungseinheit gleichzeitig verbunden ist.

Gemäß einer Variante des erfindungsgemäßen Verfahrens wird vorgeschlagen, daß gleichzeitig, vor oder nach dem Aufbau des Kommunikationskanales die Ortsbindungsvorrichtung überprüft wird und bei positiver Überprüfung die Ortsbindungsvorrichtung aktiviert wird. Die Ortsbindungsvorrichtung ist verhältnismäßig bald nach Aufnahme der Kommunikation zu überprüfen, da nur wenn die Ortsbindungsvorrichtung aktiv ist, eine Bedienbarkeit der Station insbesondere eine Steuerung der Station möglich sein soll. Gegebenenfalls ist alternativ vorgesehen, daß, soweit die Ortsbindungsvorrichtung noch nicht aktiv ist, nur Wartungs-, Diagnostik- und Zustandsinformationen übertragen werden, aber keine Einflußnahme auf die Maschine selber im Sinne einer Steuerung möglich ist.

Im Rahmen der Erfindung ist auch vorgesehen, daß bei der Ortsbindungsvorrichtung überprüft wird, ob von dem Bedienfeld ein weiteres, der Ortsbindungsvorrichtung dienendes Signal abgesandt und von dem Empfänger empfangen wird. Wird ein solches Signal, gegebenenfalls mit einer ausreichenden Feldstärke empfangen, wird die Ortsbindungsvorrichtung aktiviert und eine Steuerung der Station möglich.

In gleicher Weise wird bei der Ortsbindungsvorrichtung überprüft, ob ein Schalter, der gegebenenfalls beliebig ausgestaltet ist und sich im Stationsbereich befindet, durch die Bedienperson betätigt wurde. Wird dieser Schalter betätigt, dann wird die Ortsbindungsvorrichtung aktiviert.

In einer bevorzugten Ausgestaltung der Erfindung wird weiterhin vorgeschlagen, daß, bevor das Bedienfeld auf die Station für Anzeige, Steuerungs- und oder Diagnosezwecke zuzugreifen vermag, die Identität der Bedienperson, die durch die Identitätserkennungsvorrichtung ermittelt wurde, in der zentralen Steuereinheit überprüft wird und aufgrund dieser Überprüfung für die Bedienperson bestimmte Programme, Funktionen, Berechtigungen beziehungsweise Aufgabenfelder freigegeben werden und nach dieser Freigabe das Bedienfeld im Rahmen der vorgenannten Freigabe direkt auf die Station zugreift. Durch diese erfindungsgemäße Verfahrensweise wird erreicht, daß zwei Vorteile realisiert werden. Zunächst ist es möglich, in der zentralen Steuereinheit zentral in einer entsprechenden Datenbank das Bedienpersonal zu verwalten und dem Bedienpersonal entsprechende Rechte an Programmen, Funktionen, Berechtigungen beziehungsweise Aufgabenfeldern freizugeben, durch die die entsprechende Steuerung der jeweiligen unterschiedlichsten Stationen zugänglich sind. Der Vorteil hierbei ist, daß diese Pflege der Daten zentral erfolgt. Danach aber wird auf die zentrale Steuereinheit nicht mehr zurückgegriffen, sondern das Bedienfeld greift dann im Rahmen der vorgenannten Freigabe direkt auf die Station zu. Hierdurch wird die Steuerung erheblich beschleunigt, da das Datennetzwerk nicht mit dem Datentransfer belastet wird. Es resultiert eine sichere und auch zuverlässige und schnelle Bedienmöglichkeit.

Die Erfindung bietet folgende Vorteile. Durch den Einsatz von portablen Bedienungsfeldern, die jeweils einer Person fest zugeordnet werden können oder aufgrund einer Identifizierung zuordenbar sind und die mit den Bearbeitungs- und Transportmodulen beziehungsweise den einzelnen Anlagenteilen beziehungsweise -stationen und der zentralen Steuerungseinheit der Bearbeitungs- und Fertigungslinie in Verbindung treten beziehungsweise kommunizieren können, entfallen alle fest installierten Bedienpulte und die einzelnen Stationen beziehungsweise Anlagenteile. Es entfallen weiterhin die entsprechenden Sicherungseinrichtungen wie Schlüsselschalter und Codierungsvorrichtungen, die an den bisher fest installierten Bedienpulten realisiert werden mussten.

Die Bedienfelder sind für jede Person individuell konfigurierbar hinsichtlich Sprache, Darstellung und Funktionsumfang. Beim Funktionsumfang kann festgelegt werden, welche Module und Stationen beziehungsweise Anlagenteile eine Person bedienen und welche Funktion sie dort nutzen darf. Zum weiteren können selbstverständlich bestimmte Funktionen, für die die Bedienungsperson nicht qualifiziert ist, entsprechend ausgeschlossen und gesperrt werden. Das heißt, daß die Zuordnung aufgaben- und qualifikationsbezogen selektiv auf ausgewählte Maschinen erfolgen kann. Die Schlüsselschalter und Paßwörter für die einzelnen Stationen entfallen dabei. Es ist weiterhin möglich, den Bedienerkreis zum Bedienen auch normalerweise nicht geschüzter Funktionen einzuschränken. Alle Diagnosefunktionen für die Maschineneinheiten, für die Stationen, für die Zentrale, für den Transport und für die Übertragungsmedien stehen dem Bediener innerhalb des Bereiches der kabellosen Verbindungen ständig zur Verfügung. Die Bedienperson muß sich dazu nicht einmal direkt an der jeweiligen Station befinden, um sich zum Beispiel über Voralarme, Teilemangel, Störungsmeldungen oder dergleichen zu informieren.

Es kann beispielsweise vorgesehen werden, daß die Maschine beziehungsweise Station sich bei Bedarf selbstständig das dazu passende Personal aufruft. Ein weiterer Vorteil ist dadurch angegeben, daß unabhängig vom Maschinentyp und Steuerungshersteller einheitliche Bedieneroberflächen für die Bedienfelder insgesamt vorgesehen werden. Damit wird eine vorhande Störungsquelle beseitigt. Durch die Portabilität der Bedienungspulte ist eine hohe Ergonomie angegeben. Es ist beispielsweise auch möglich, bestimmte Aufgaben, die bisher durch mehrere Bedienpersonen ausgeübt wurden, dann einer einzelnen Bedienungsperson zuzuordnen.

Die Erfindung wird nachfolgend anhand von Ausführungsbeispielen und Figuren weiter beschrieben. Es zeigen:
- Fig. 1:: eine Bearbeitungs- und Fertigungslinie mit erfindungsgemäß ausgebildeten Stationen;
- Fig. 2:: ein Blockschaltbild der Funktionsweise der Datenübertragung zwischen den Stationen der zentralen Steuerungseinheit und dem Bedienfeld;

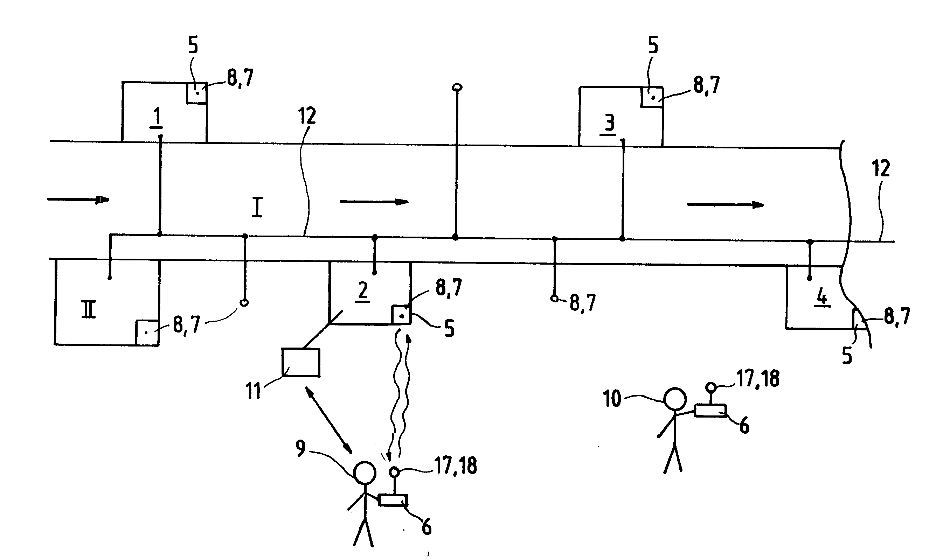

Figur 1 zeigt schematisch eine Bearbeitungs- oder Fertigungslinie I, an der beidseitig die Stationen 1 bis 4 angeordnet sind. Am Ausgangspunkt der Bearbeitungs- beziehungsweise Fertigungslinie I ist die zentrale Steuereinheit II angeordnet. Entlang der Bearbeitungs- beziehungsweise Fertigungslinie I bewegen sich mehrere Bedienpersonen, welche lediglich schematisch dargestellt sind. In dieser Ausführungsform wurden lediglich zwei Bedienpersonen ausgewählt. Es können sich selbstverständlich wesentlich mehr Bedienpersonen an der Bearbeitungs- und Fertigungslinie befinden. Dies richtet sich insbesondere immer nach der Größe der jeweiligen Anlage.

Da derartige Bearbeitungs- und Fertigungslinien Größenordnungen besitzen, die ganze Werkhallen füllen, ist es selbstverständlich möglich, daß eine Vielzahl von Stationen und eine Vielzahl von Bedienpersonen sich entlang dieser Bearbeitungs- und Fertigungslinien befinden. Die Bedienpersonen 9 und 10 tragen portable Bedienfelder 6. Die Bedienfelder 6 sind dabei beispielsweise mit Sendern 17 und Empfängern 18 ausgerüstet, die sowohl mit den Stationen 1 - 4 als auch mit der zentralen Steuereinheit II kabellos in Verbindung treten können. Die Bedienpersonen 9 und 10 sind dabei frei beweglich und nicht an die normalerweise an den Stationen 1 bis 4 angeordneten festen Bedienpulten beziehungsweise Bedienfelder gebunden. Sie sind auch nicht über Kabel mit den einzelnen Stationen beziehungsweise mit der zentralen Steuereinheit II verbunden, sondern können beispielsweie über Funkverbindung mit allen Anlagenteilen zum Beispiel für Wartungs- oder Diagnostikzwecken und der zentralen Steuereinheit II kommunizieren. Die Stationen 1 - 4 sowie die zentrale Steuereinheit II sind durch ein Datennetzwerk 12 miteinander verbunden. In diesem Datennetzwerk 12, wie auch in den Stationen 1 - 4 sind Sender und Empfänger 7, 8 vorgesehen. Die Sende-/Empfangseinheit 17, 18 des Bedienfeldes 6 kann dabei entweder über die Sender/Empfänger 7, 8 der jeweiligen Stationen 1 - 4 oder aber direkt auf die des Datennetzwerkes 12 zugreifen. Die Komfortabilität einer solchen Anordnung steigt erheblich, da zum Beispiel für Diagnostikzwecke (nicht für Steuerungszwecke) von einem beliebigen Platz aus auf das Datennetzwerk 12 und die daran angeschlossenen Einheiten Zugriff möglich ist.

Aus Figur 1 wird deutlich, daß sowohl die Stationen 1 - 4 als auch die zentrale Steuereinheit II ebenfalls Sender 7 und Empfänger 8 aufweisen. An den einzelnen Stationen ist dabei zusätzlich eine Steuereinrichtung der Station 5 angeordnet. Alle zuvor bereits beschriebenen vorteilhaften Ausführungsformen der Erfindung sind mittels einer derart gewählten Lösung durchführbar. An der schematischen Darstellung gemäß der Figur 1 wird lediglich die Verbindung zwischen der Station 2 und der Bedienperson 9 über das Bedienfeld 6 angedeutet. Wie bereits zuvor beschrieben, kann eine gleichzeitige Verbindung mit mehreren Stationen und/oder der zentralen Steuereinheit erfolgen. Des Weiteren ist eine Ortsbindungsvorrichtung 11 vorgesehen, die mit der Station 2 zusammenwirkt. Die Ortsbindungsvorrichtung 11 wird nur dann aktiviert, wenn die Person 9 im Bereich der Station 2 ist. Hierzu wurden verschiedene Mittel beschrieben. Ist die Ortsbindungsvorrichtung 11 aktiviert, so ist die Station 2 auch zumindest für Steuerungsanwendungen des Anwenders 9 freigegeben.

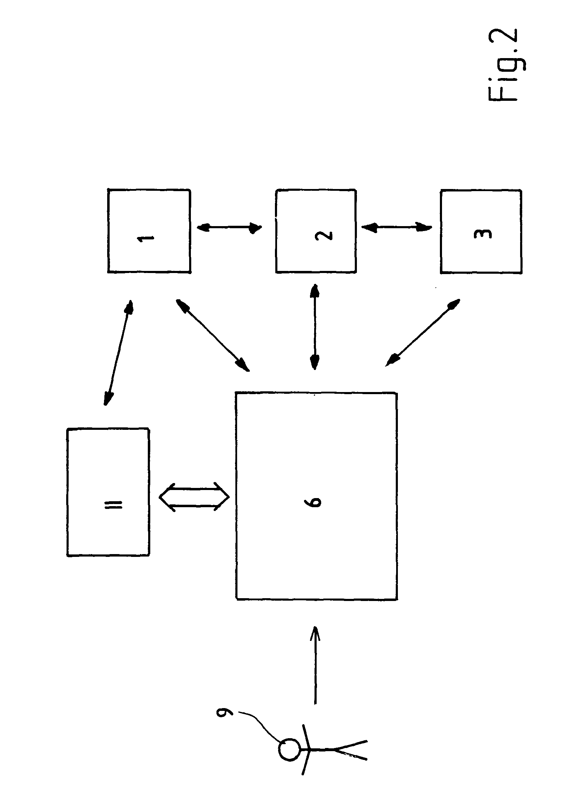

Figur 2 zeigt ein Blockschaltbild, welches verdeutlicht, wie die Kommunikation der einzelnen Bestandteile der Erfindung erfolgt. Nachdem sich beispielsweise die Bedienperson 9 bei dem Bedienfeld 6 angemeldet beziehungsweise identifiziert hat, kann die Bedienperson nunmehr über die zentrale Steuerungseinheit, die ihr zugeordneten Funktionen dieser Steuerungseinheit abrufen. Gleichzeitig kann sie über das Bedienfeld 6 die einzelnen Stationen 1, 2 oder 3 entweder gleichzeitig oder nacheinander aufrufen und die ihr zugeordneten Funktionen bedienen. Die Kommunikation zwischen den einzelnen Stationen kann selbstverständlich auch derart erfolgen, daß lediglich an der Station 1 ein Sender und ein Empfänger angeordnet ist und die Stationen 1, 2 und 3 untereinander verbunden sind, so daß der Informations- beziehungsweise Datenaustausch zwischen den einzelnen Stationen 1-4, dem Bedienfeld 6 und der zentralen Steuereinheit II lediglich über den Sender und den Empfänger der Station 1 erfolgt. Ein Datenaustausch zwischen den einzelnen Stationen und der zentralen Steuereinheit II unabhängig vom Bedienfeld 6 ist selbstverständlich auch möglich.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Station, insbesondere Bearbeitungs-, Meß-, Transportstation und dergleichen, welche insbesondere in einer Bearbeitungs- oder Fertigungslinie angeordnet ist, mit mindestens einer Steuereinrichtung mit Bedienfeld für Anzeige-, Steuerungs- und/oder Diagnosefunktionen der Station, wobei das Bedienfeld (6) portabel und kabellos zumindest auf die Steuereinrichtung (5) der Station einzuwirken vermag, **dadurch gekennzeichnet, daß** eine Ortsbindungsvorrichtung vorgesehen ist und ein Einwirken des portablen Bedienfeldes (6) auf die Steuereinrichtung (5) beziehungsweise die Station (1-4) nur bei aktivierter Ortsbindungsvorrichtung möglich ist.

2. Station nach dem vorhergehenden Anspruch 1, **dadurch gekennzeichnet, daß** die Station (1-4) beziehungsweise die zentrale Steuereinheit (II) und das Bedienfeld (6) durch mindestens je einen Sender (7) und mindestens je einen Empfänger (8) miteinander verbunden sind und das Bedienfeld (6) eine Sender-/Empfangseinheit (17, 18) für eine bidirektionale Kommunikation mit der Station (1-4) beziehungsweise die zentrale Steuereinheit (II) aufweist.

3. Station nach einem oder mehreren der vorhergehenden Ansprüche, **dadurch gekennzeichnet, daß** mindestens ein Bedienfeld (6) mit mehreren Stationen (1-4) gleichzeitig oder nacheinander verbindbar ist und/oder das Bedienfeld (6) mittelbar über die zentrale Steuereinheit (II) oder unmittelbar auf die Steuereinrichtung (5) der Station (1-4) wirkt.

4. Station nach einem oder mehreren der vorhergehenden Ansprüche, **gekennzeichnet durch** einheitliche Funktions-, Anzeige- und Steuerprogramme der Bedienfelder (6) für die Stationen (1-4) beziehungsweise deren Steuereinrichtungen (5) derart, daß eine einheitliche Bedienung der unterschiedlichen Stationen, unabhängig vom jeweiligen Maschinentyp, gegeben ist.

5. Station nach einem oder mehreren der vorhergehenden Ansprüche, **dadurch gekennzeichnet, daß** das Bedienfeld (6) mit der zentralen Steuereinheit (II) der Bearbeitungsund Fertigungslinie (I) kabellos verbunden ist, derart, daß vom Bedienfeld (6) Programme und Funktionen der zentralen Steuereinheit (II) für die Bearbeitungs- und Fertigungslinie (I) beziehungsweise für eine spezielle Station abruf- und/oder aktivierbar beziehungsweise auf das Bedienfeld übertragbar sind und/oder das Bedienfeld (6) eine eindeutige Bedienfeldcodierung aufweist.

6. Station nach einem oder mehreren der vorhergehenden Ansprüche, **dadurch gekennzeichnet, daß** die Station (1-4) eine eindeutige Stationscodierung aufweist und aufgrund der Stationscodierung im Bedienfeld (6) die jeweiligen Programme und Funktionen für die Station aktivierbar sind.

7. Station nach einem oder mehreren der vorhergehenden Ansprüche, **dadurch gekennzeichnet, daß** über das Bedienfeld (6) mittels einer Identitätserkennungs-Vorrichtung, wie zum Beispiel Schlüsselschalter, Passwortabfrage über Eingabe- und Sichtfeld, Magnetstreifenleser, Chipkarte, Transponder oder dergleichen, der Bedienperson bestimmte Programme, Funktionen, Berechtigungen beziehungsweise Aufgabenfelder zuordenbar sind und/oder das Bedienfeld (6) Sprachauswahlmenues aufweist, mittels derer Sprachen einstellbar sind.

8. Station nach einem oder mehreren der vorhergehenden Ansprüche, **dadurch gekennzeichnet, daß** die kabellose Verbindung eine elektromagnetische Verbindung, zum Beispiel eine Funkverbindung, Infrarot- oder optische Verbindung, ist.

9. Station nach einem oder mehreren der vorhergehenden Ansprüche, **dadurch gekennzeichnet, daß** die Ortsbindungsvorrichtung als zusätzliche, kabellose Verbindung zwischen dem Bedienfeld und der Station beziehungsweise der Bearbeitungs- oder Fertigungslinie ausgebildet ist und/oder die Ortsbindungsvorrichtung in einer, von dem Bedienfeld getrennten Anordnung, insbesondere in einem Personenidentifikationsgerät realisiert ist, und die Ortsbindungsvorrichtung nur aktivierbar ist, wenn sich die diese Anordnung tragende Bedienperson im Stationsbereich befindet und/oder die Ortsbindungsvorrichtung durch eine Ortungsanordnung zur laufenden Bestimmung des Ortes entweder des Bedienfeldes oder der Bedienperson gebildet ist, und die Ortsbindungsvorrichtung nur aktivierbar ist, wenn sich der Ort im Stationsbereich befindet.

10. Station nach einem oder mehreren der vorhergehenden Ansprüche, **dadurch gekennzeichnet, daß** die Ortsbindungsvorrichtung als elektromagnetischer, mechanischer, elektrischer oder optisch wirkender Schalter ausgebildet ist und/oder die Ortsbindungsvorrichtung nur innerhalb einer vorgebbaren Entfernung der Bedienperson zur Station aktivierbar ist und/oder die Ortsbindungsvorrichtung als eine im Funkband oder IR-Wellenspektrum arbeitende Verbindung ausgebildet ist.

11. Station nach einem oder mehreren der vorhergehenden Ansprüche, **dadurch gekennzeichnet, daß** die Ortsbindungsvorrichtung dadurch aktivierbar ist, daß das von dem Bedienfeld abgegebene Signal von dem Empfänger mit einer Mindestsignalstärke empfangen wird und/oder die Ortsbindungsvorrichtung dadurch aktivierbar ist, daß das von dem Bedienfeld abgegebene Signal von mehreren, gegebenenfalls vorbestimmten Empfängern empfangen wird.

12. Station nach einem oder mehreren der vorhergehenden Ansprüche, **dadurch gekennzeichnet, daß** das Bedienfeld (6) als eine auf dem Kopf getragene, insbesondere brillenartige Bedienfeldeinheit ausgebildet ist.

13. Station nach einem oder mehreren der vorhergehenden Ansprüche, **dadurch gekennzeichnet, daß** die Bedienfeldeinheit ein Visier besitzt, über welches Informationen für die Bedienperson (9, 10) angezeigt werden und/oder das Bedienfeld (6), insbesondere die Bedienfeldeinheit, ein Spracheingabe- und -ausgabesystem besitzt, über das die Kommunikation zwischen Bedienperson (9, 10) und Bedienfeld (6) erfolgt.

14. Station nach einem oder mehreren der vorhergehenden Ansprüche, **dadurch gekennzeichnet, daß** das Bedienfeld (6) Bedienperson-Aktivitäts-Sensoren aufweist, welche Unregelmäßigkeiten der Bedienperson (9, 10) erkennen und gegebenenfalls ein Notprogramm aktivieren, insbesondere ein Stoppen der Station oder der Fertigungslinie bewirken und/oder das Bedienfeld (6) eine Dateneingabe- und eine Datenanzeigevorrichtung aufweist, insbesondere einen berührungsempfindlichen Bildschirm für Kontroll-, Anzeige-, Eingabe- beziehungsweise Bedienfunktionen und/oder das Bedienfeld (6) eine akustisch, optisch und/oder mechanisch wirkende Informationseinheit aufweist, die durch das Eintreffen einer Fehler- oder Aufgabeninformation aktiviert wird.

15. Station nach einem oder mehreren der vorhergehenden Ansprüche, **dadurch gekennzeichnet, daß** die Stationen (1-4) bei auftretenden Fehlermeldungen beziehungsweise anstehenden Aufgaben, gegebenenfalls in Abhängigkeit der Fehler- beziehungsweise Aufgabenart, eine Fehler- beziehungsweise Aufgabeninformation auf ein Bedienfeld (6), in Abhängigkeit der Fehler- beziehungsweise Aufgabenart auf ein spezielles Bedienfeld (6) überträgt.

16. Station nach einem oder mehreren der vorhergehenden Ansprüche, **gekennzeichnet durch** eine digitalisierte Datenübertragung der kabellosen Verbindung.

17. Station nach einem oder mehreren der vorhergehenden Ansprüche, **dadurch gekennzeichnet, daß** die zentrale Steuereinheit (II) beziehungsweise die Station (1-4) oder das Bedienfeld (6) die jeweils an der Station über das Bedienfeld (6) ausgeführten Programme/Funktionen mit protokolliert und gegebenenfalls abspeichert.

18. Station, inbesondere Bearbeitungs-, Meß-, Transportstation und dergleichen, welche insbesondere in einer Bearbeitungs- oder Fertigungslinie angeordnet ist, mit mindestens einer Steuereinrichtung mit Bedienfeld für Anzeige-, Steuerungs- und/oder Diagnosefunktionen der Station, wobei das Bedienfeld (6) portabel und kabellos zumindest auf die Steuereinrichtung (5) der Station einzuwirken vermag, insbesondere nach einem oder mehreren der vorhergehenden Ansprüche, **dadurch gekennzeichnet, daß** die kabellose Verbindung zwischen dem Bedienfeld (6) und der Steuereinrichtung (5) durch Funk, insbesondere in einem Frequenzbereich von 200 Megahertz bis 100 Gigahertz, bevorzugt zwischen 1 und 10 Gigahertz, insbesondere zwischen 2 und 3 Gigahertz, sowie zwischen 4 und 6 Gigahertz, erfolgt.

19. Bearbeitungs- oder Fertigungslinie mit mindestens einer Station (1-4) nach einem oder mehreren der vorhergehenden Ansprüche.

20. Bearbeitungs- oder Fertigungslinie nach dem vorhergehenden Anspruch 19, **dadurch gekennzeichnet, daß** mehrere Stationen (1-4) über einen gemeinsamen Sender (7) und Empfänger (8) mit mindestens einem Bedienfeld (6) und/oder der zentralen Steuereinheit (II) verbunden sind.

21. Bearbeitungs- oder Fertigungslinie nach einem oder beiden der vorhergehenden Ansprüchen 19 und 20, **dadurch gekennzeichnet, daß** die zentrale Steuereinheit (II) als Zentralrechner ausgebildet ist und/oder die Stationen (1-4) der Bearbeitungs- beziehungsweise Fertigungslinie sowie die zentrale Steuereinheit (II) durch ein Datennetzwerk miteinander verbunden sind und der Sender / Empfänger (7, 8) beziehungsweise die Ortsbindungsvorrichtung entweder mittelbar über die Station oder unmittelbar mit dem Datennetzwerk verbunden ist.

22. Verfahren für den Aufbau einer Kommunikation für Anzeige-, Steuerungs- und/oder Diagnosezwecke zwischen einem Bedienfeld und einer Station, insbesondere nach einem oder mehreren der vorhergehenden Ansprüche 1 bis 18, wobei zunächst zwischen dem Bedienfeld und der Station ein Kommunikationskanal errichtet wird, zumindest die Stationscodierung in das Bedienfeld übertragen wird und aufgrund der Stationscodierung die jeweiligen Programme beziehungsweise Funktionen für die Station auf dem Bedienfeld bedienbar werden.

23. Verfahren nach Anspruch 22, **dadurch gekennzeichnet, daß** die Station nur mit aktivierter Ortsbindungsvorrichtung bedienbar wird.

24. Verfahren nach einem oder beiden der Ansprüche 22 und 23, **dadurch gekennzeichnet, daß** gleichzeitig, vor oder nach dem Aufbau des Kommunikationskanals die Ortsbindungsvorrichtung überprüft wird und bei positiver Überprüfung die Ortsbindungsvorrichtung aktiviert wird und/oder bei der Ortsbindungsvorrichtung überprüft wird, ob von dem Bedienfeld ein weiteres, der Ortsbindungsvorrichtung dienendes Signal abgesandt und von dem Empfänger empfangen wird.

25. Verfahren nach einem oder mehreren der Ansprüche 22 bis 24, **dadurch gekennzeichnet, daß** bei der Ortsbindungsvorrichtung überprüft wird, ob Schalter, die sich im Stationsbereich befinden, durch die Bedienperson betätigt wurden.

26. Verfahren nach einem oder mehreren der Ansprüche 22 bis 25, **dadurch gekennzeichnet, daß** das Bedienfeld in Abhängigkeit der Stationscodierung aus der zentralen Steuerungseinheit (II) die jeweiligen Programme/Funktionen eingespielt bekommt und/oder sich die Bedienperson über eine Identitätserkennungsvorrichtung an dem Bedienfeld identifiziert und benutzerabhängig die jeweiligen Programme/Funktionen zur Verfügung gestellt werden.

27. Verfahren nach einem oder mehreren der vorhergehenden Ansprüche 22 bis 26, **dadurch gekennzeichnet, daß** ein Bedienfeld gleichzeitig mit zwei oder mehreren Stationen verbunden ist und/oder eine Station mit zwei oder mehreren Bedienfeldern gleichzeitig verbunden ist.

28. Verfahren nach einem oder mehreren der vorhergehenden Ansprüche 22 bis 27, **dadurch gekennzeichnet, daß** bevor das Bedienfeld auf die Station für Anzeige-, Steuerungsund/oder Diagnosezwecke zuzugreifen vermag, die Identität der Bedienperson, die durch die Identitätserkennungs-Vorrichtung ermittelt wurde, in der zentralen Steuereinheit überprüft wird und aufgrund dieser Überprüfung für die Bedienperson bestimmte Programme, Funktionen, Berechtigungen beziehungsweise Aufgabenfelder freigegeben werden und nach dieser Freigabe das Bedienfeld im Rahmen der vorgenannten Freigabe direkt auf die Station zugreift.
